(19) **Europäisches Patentamt**

**European Patent Office**

**Office européen des brevets**

(11) **EP 1 136 671 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.7: **F01N 11/00**

(21) Anmeldenummer: **01106782.4**

(22) Anmeldetag: **17.03.2001**

(54) **Verfahren zur Überprüfung der Funktionstüchtigkeit eines Abgasreinigungskatalysators**

Method for examining the performance of exhaust gas catalyst

Méthode pour examiner le bon fonctionnement d'un catalyseur de gaz d'échappement

(84) Benannte Vertragsstaaten:
**AT BE CH CY DE DK ES FI FR GB GR IE IT LI LU MC NL PT SE TR**

(30) Priorität: **21.03.2000 DE 10013893**

(43) Veröffentlichungstag der Anmeldung:
**26.09.2001 Patentblatt 2001/39**

(73) Patentinhaber: **OMG AG & Co. KG**
**63457 Hanau (DE)**

(72) Erfinder:
• **Neuhausen, Ulrich, Dr.**
**63796 Kahl am Main (DE)**

• **Klein, Harald, Dr.**
**63856 Bessenbach (DE)**
• **Lox, Egbert, Dr.**
**63403 Hanau (DE)**
• **Gieshoff, Jürgen, Dr.**
**63599 Biebergemünd (DE)**
• **Kreuzer, Thomas, Dr.**
**61184 Karben (DE)**

(74) Vertreter: **VOSSIUS & PARTNER**
**Postfach 86 07 67**
**81634 München (DE)**

(56) Entgegenhaltungen:
DE-A- 4 039 429    US-A- 5 175 997
US-A- 5 732 551    US-A- 5 941 918

**Beschreibung**

Die Erfindung betrifft ein Verfahren zur Überprüfung der Funktionstüchtigkeit eines Katalysators für die Reinigung der Abgase eines Verbrennungsmotors. Besonders eignet sich das Verfahren für die Überwachung eines Dieseloxidationskatalysators. Die Funktionstüchtigkeit des Katalysators wird erfindungsgemäß durch Messen des Umsatzes von Kohlenmonoxid in Kombination mit einer Temperaturmessung überwacht. Das Verfahren eignet sich auch für die Überwachung der Funktionstüchtigkeit von Katalysatoren für das HC-DeNO$_x$- und das Harnstoff-SCR-Verfahren sowie für NO$_x$-Adsorber-Katalysatoren,.

Für Kraftfahrzeuge mit Benzinmotor ist es Pflicht, das Funktionieren aller abgasrelevanter Bauteile des Abgassystems während des Fahrzeugbetriebes durch ein On-Board-Diagnosesystem (OBD-System) zu überwachen. Fehlfunktionen eines oder mehrerer Bauteile des Abgassystems werden durch das Aufleuchten einer Warnlampe signalisiert. Bei Fahrzeugen, die mit einem katalytischen Konverter zur Abgasnachbehandlung ausgerüstet sind, muß auch die Funktionsfähigkeit des Konverters durch das OBD-System überwacht werden.

Zukünftig wird es nötig werden, auch Dieselkraftfahrzeuge mit einem OBD-System auszurüsten. Neben der Abgasrückführung und dem Auspuffsystem wird das OBD-System auch die Überwachung von Dieselpartikelfiltern und insbesondere von Dieseloxidationskatalysatoren einschließen. Bei Fahrzeugen mit Benzinmotoren wird zur Überwachung von Dreiweg-Katalysatoren ein indirektes OBD-Verfahren eingesetzt, bei welchem die Sauerstoffspeicherfähigkeit des Katalysators gemessen und bewertet wird. Dieses Verfahren ist bei Dieselmotoren nicht anwendbar, da diese immer mit Sauerstoffüberschuss, das heißt mit einem mageren Luft/Kraftstoffgemisch, betrieben werden.

Aufgabe der vorliegenden Erfindung ist es daher, ein Verfahren zur Überprüfung der Funktionstüchtigkeit eines Abgasreinigungskatalysators anzugeben, welches auch für die Überprüfung der Funktion von Oxidationskatalysatoren für Dieselmotoren geeignet ist und die Bestimmung der Katalysatoraktivität direkt über die Messung der Umsetzung von Kohlenmonoxid (CO) gestattet.

Das in dieser Erfindung beschriebene Verfahren ist dadurch gekennzeichnet, dass der Verbrennungsmotor mit einer elektronischen Steuerung aus Motorelektronik und OBD-Elektronik ausgerüstet ist und zur Beurteilung der verbliebenen katalytischen Aktivität des Katalysators die Differenz $\Delta T$ der aktuellen Katalysatoraustrittstemperatur des Abgases $T_A$ zur Anspringtemperatur für Kohlenmonoxid $T_{CO,50\%,frisch}$ des frischen Katalysators im jeweiligen Motorbetriebspunkt

$$\Delta T = T_A - T_{CO,\,50\%,frisch} \qquad (1)$$

bestimmt und der Umsetzungsgrad $r_{CO}$ für Kohlenmonoxid ermittelt werden und dass ein Überschreiten der Temperaturdifferenz $\Delta T$ über einen Grenzwert $\Delta T_G$ an einem Motorbetriebspunkt bei gleichzeitigem Vorliegen eines Umsetzungsgrades $r_{CO}$ für Kohlenmonoxid unter einem Grenzwert $r_{CO,G}$ des Umsetzungsgrades für Kohlenmonoxid in der OBD-Elektronik als Fehlfunktion des Katalysators aufgezeichnet wird.

Unter der Anspringtemperatur für die Kohlenmonoxidoxidation wird im Rahmen dieser Erfindung diejenige Temperatur $T_{CO,50\%}$ verstanden, bei der Kohlenmonoxid gerade zu 50% umgesetzt wird.

Erfindungsgemäß wird also die nach einer gewissen Betriebsdauer noch verbliebene katalytische Aktivität des Katalysators direkt beurteilt. Als charakteristische Größen hierfür dienen der Umsetzungsgrad $r_{CO}$ für Kohlenmonoxid, die aktuelle Katalysatoraustrittstemperatur des Abgases $T_A$ und die Frischanspringtemperatur für CO, $T_{CO,50\%,frisch}$, die eine Funktion der Drehzahl und der Last ist und in der OBD-Elektronik vorab abgespeichert werden kann.

Der Umsatzgrad $r_{CO}$ für Kohlenmonoxid kann nach folgender Beziehung bestimmt werden

$$r_{CO} = 1 - \frac{c_{CO,2}}{c_{CO,1}}, \qquad (2)$$

wobei $c_{CO,2}$ die gemessene Konzentration von Kohlenmonoxid im Abgas hinter dem Katalysator und $c_{CO,1}$ die gemessene Konzentration von Kohlenmonoxid im Abgas vor dem Katalysator ist.

Alternativ besteht die Möglichkeit, den Umsatzgrad $r_{CO}$ für Kohlenmonoxid gemäß folgender Beziehung zu bestimmen

$$r_{CO} = 1 - \frac{c_{CO,2}}{c_{CO,Motor}}, \qquad (3)$$

wobei $c_{CO,2}$ die gemessene Konzentration von Kohlenmonoxid im Abgas hinter dem Katalysator und $c_{CO,Motor}$ die in der OBD-Elektronik als Kennfeld abgespeicherte Kohlenmonoxidkonzentration für den aktuellen Motorbetriebspunkt ist.

In beiden Fällen kann die Messung der Kohlenmonoxid-Konzentrationen mit Hilfe von Kohlenmonoxidsensoren erfolgen.

Die Erfindung wird nur an Hand der Figuren 1 bis 6 näher erläutert. Es zeigen

**Figur 1:** Temperaturabhängigkeit der Schadstoffumsetzung eines frischen Katalysators für die im Abgas eines Dieselmotors enthaltenen Kohlenwasserstoffe (HC), Stickoxide (NOx) und Kohlenmonoxid (CO)

**Figur 2:** Temperaturabhängigkeit der Schadstoffumsetzung eines gealterten Katalysators für die im Abgas eines Dieselmotors enthaltenen Kohlenwasserstoffe (HC), Stickoxide (NOx) und Kohlenmonoxid (CO)

**Figur 3:** CO-Emissionen während eines MVEG-A/2 Fahrzyklusses in Abhängigkeit von der Anspringtemperatur des Katalysators für Kohlenmonoxid

**Figur 4:** HC-Emissionen während eines MVEG-A/2 Fahrzyklusses in Abhängigkeit von der Anspringtemperatur des Katalysators für Kohlenwasserstoffe

**Figur 5:** Aufbau eines Abgasreinigungssystems für die Durchführung des erfindungsgemäßen Verfahrens

**Figur 6:** Flußdiagramm für das erfindungsgemäße Verfahren

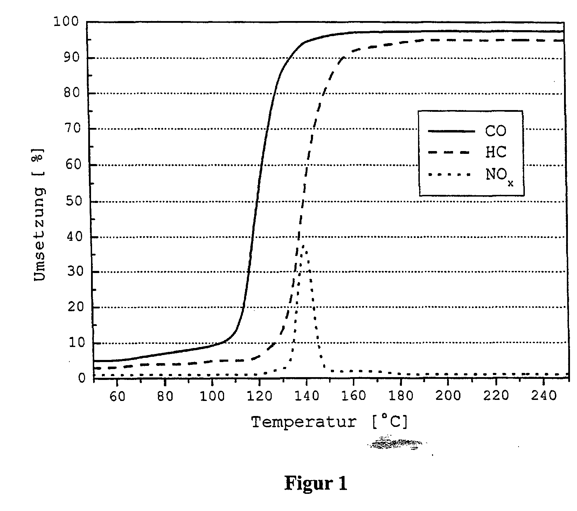

Die Schadstoffumsetzung eines Katalysators ist, bis zu einem Maximum, von seiner Temperatur abhängig. Dabei zeigt ein Katalysator für jeden der drei gasförmigen Hauptschadstoffe CO, HC (Kohlenwasserstoffe)und NOx (Stickoxide) einen anderen Temperaturverlauf der Schadstoffumsetzung. In Figur 1 sind als Beispiel die Konvertierungsgrade für CO, HC und NOx eines frischen Dieseloxidationskatalysators in Abhängigkeit von der Abgastemperatur vor dem Katalysator dargestellt.

Für Kohlenmonoxid und die Kohlenwasserstoffe steigt die Umsetzung in einem schmalen Temperaturbereich um die betreffende Anspringtemperatur $T_{CO,50\%}$, beziehungsweise $T_{HC,50\%}$ stark an und nähert sich dann dem maximalen Umsetzungsgrad. Bei Dieseloxidationskatalysatoren liegt die Umsetzung für Stickoxide bei tiefen Temperaturen nahe bei Null. Sie erreicht im Bereich der Anspringtemperatur für Kohlenwasserstoffe $T_{HC,50\%}$ ein Maximum und fällt bei hohen Katalysatortemperaturen wieder bis nahe auf Null ab.

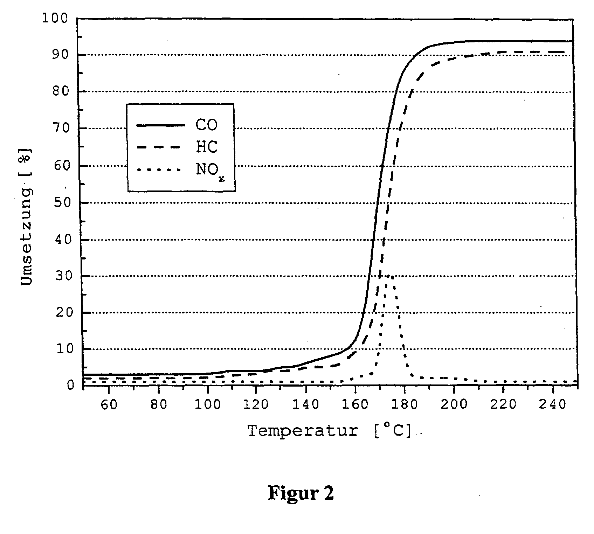

Mit zunehmender Gebrauchsdauer des Katalysators vermindert sich seine katalytische Aktivität durch thermische Überbelastungen und Vergiftung zum Beispiel durch Schwefel- Phosphor- und Schwermetallverbindungen im Abgas, die entweder aus den verwendeten Kraft- und Schmierstoffen stammen oder auf Abrieb im Motor zurückgehen. Die Alterung des Katalysators äußert sich durch eine schleichende Erhöhung seiner Anspringtemperaturen und bei fortschreitender Schädigung zusätzlich durch eine Verminderung der maximalen Umsetzungen bei hohen Temperaturen. In Figur 2 sind als Beispiel die Umsatzkurven eines durch Dauerbetrieb gealterten Dieseloxidationskatalysators dargestellt.

Als besonders kritisch gegenüber Alterungseffekten bei Dieseloxidationskatalysatoren hat sich die CO-Oxidation erwiesen (Figur 2). Die Beurteilung von Katalysatoren über die CO-Oxidationsfähigkeit ist deshalb so gut geeignet für Dieselanwendungen, weil derzeitige (Dieseloxidationskatalysator) und zukünftige Dieselabgasnachbehandlungssysteme (HC-DeNOx, NOx-Adsorber, Harnstoff-SCR) weitestgehend auf Platin als katalytisch aktives Material beruhen. Die Aktivität der Platinkatalysatoren hängt in allen Fällen sehr stark von der Platinpartikelgröße ab. Die Aktivitätsverschlechterung der Katalysatoren nach Alterung ist auf eine Vergrößerung der katalytisch aktiven Platinpartikel und den einhergehenden Verlust an katalytisch wirksamer Oberfläche zurückzuführen. Die CO-Oxidation ist die Reaktion, die diese Veränderungen sehr genau erfaßt. Wählt man die Temperaturdifferenz $\Delta T$ von Gleichung (1) groß genug um eine Fehldiagnose auszuschließen, ist die Verschlechterung der Kohlenmonoxidoxidationsfähigkeit und damit der Anstieg der Anspringtemperatur $T_{CO,50\%}$ für Kohlenmonoxid ein universelles Mittel zur Aktivitätsbestimmung von Dieselkatalysatoren.

Weiterhin hat die Wahl von CO als Indikatorschadstoff für die On-Board-Diagnose gegenüber HC den Vorteil, dass es sich um eine klar definierte, chemische Verbindung handelt, die bei allen Motorbetriebspunkten identisch ist. Bei HC handelt es sich um ein Stoffgemisch, wobei dessen Zusammensetzung vom Motorbetriebspunkt abhängig ist. Eine exakte messtechnische Erfassung ist somit im Vergleich zu CO komplizierter. Ein weiterer Vorteil von CO als Indikatorschadstoff gegenüber HC liegt in der Unterschiedlichen Definition der Emissionsgrenzwerte gemäß der europäischen Emissionsgesetzgebung begründet. Während es für CO, NOx und Partikel separate Grenzwerte gibt, sind die Grenzwerte für HC nur für die Summe aus HC und NOx definiert. Daher hängen die tolerierbaren HC-Emissionen von den aktuellen NOx-Emissionen ab. Die Wahl von HC als alleinigem Indikatorschadstoff ist daher ungünstig.

Die Kohlenmonoxidkonzentration $c_{CO,2}$ im Abgas hinter dem Katalysator wird erfindungsgemäß durch einen hinter dem Konverter in den Abgasstrang eingebauten Kohlenmonoxidsensor bestimmt.

Die Kohlenmonoxidkonzentration $c_{CO,1}$ vor dem Katalysator kann ebenfalls direkt mit einem Kohlenmonoxidsensor gemessen oder aus den zuvor in der OBD-Elektronik für jeden Motorbetriebspunkt als Kennfeld abgespeicherten Werten entnommen werden. Zu diesem Zweck werden die Rohemissionen des verwendeten Motortyps vorab für alle Motorbetriebspunkte bestimmt und als Konzentrationswerte als Funktion von Drehzahl und Last in der OBD-Elektronik abgespeichert. Die aus dem Speicher der OBD-Elektronik entnommenen Konzentrationswerte, die den Rohemissionswerten des Motors entsprechen, werden im folgenden mit $c_{CO,Motor}$ bezeichnet. Der Umsetzungsgrad des Schadstoffes berechnet sich also in diesem Fall gemäß Gleichung (3).

Im Fahrzeugbetrieb werden die Motorbetriebsdaten, das heißt der bei der Messung und Berechnung vorliegende Betriebspunkt, kontinuierlich von der Motorelektronik an die OBD-Elektronik übermittelt.

Erfindungsgemäß wird zur Beurteilung des Zustandes des Katalysators die aktuelle Abgastemperatur $T_A$ hinter dem Katalysator durch einen Temperatursensor gemessen und der Umsetzungsgrad $r_{CO}$ für Kohlenmonoxid für die entsprechende Temperatur ermittelt. Die Ermittlung von $r_{CO}$ nach Gleichung (3) aus $C_{CO,2}$ und den als Kennfeld abgespeicherten Daten $c_{CO,Motor}$ hat hier gegenüber der Messung beider Konzentrationswerte neben den günstigen Kosten den Vorteil, dass nicht der Quotient zweier sehr unterschiedlich großer Sensorsignale gebildet werden muss. Hinzu kommt, dass bei Verwendung von zwei Sensoren der Sensor vor dem Katalysator ständig einer anderen Gasatmosphäre ausgesetzt ist wie der Sensor hinter dem Katalysator, was zu einer unterschiedlichen Alterung der Sensoren führen würde, die bei der Berechnung des Umsetzungsgrades berücksichtigt werden müsste.

Die Temperaturmessung erfolgt hinter dem Katalysator, um im dynamischen Fahrbetrieb zu gewährleisten, dass die gemessene Abgastemperatur der tatsächlichen Katalysatortemperatur entspricht. Dies wäre bei Messung der Abgastemperatur vor dem Katalysator aufgrund seiner thermischen Trägheit beim Kaltstart und bei schnellen Lastwechseln nicht gewährleistet.

Für die Beurteilung des Katalysators ist nicht die absolute Höhe seiner Temperatur entscheidend, sondern die Differenz $\Delta T$ zwischen der aktuellen Katalysatoraustrittstemperatur und der CO-Anspringtemperatur des frischen Katalysators $\Delta T = T_A - T_{CO,50\%,frisch}$. Die Anspringtemperatur $T_{CO,50\%,frisch}$ ist eine Funktion aller Schadstoffkonzentrationen, das heißt der Rohemissionen des Motors, und der Raumgeschwindigkeit im katalytischen Konverter. Die Rohemissionen des Motors und die Raumgeschwindigkeit innerhalb des Konverters sind Funktionen von Last und Drehzahl. Die Anspringtemperaturen $T_{CO,50\%,frisch}$ für alle Motorbetriebspunkte werden daher als Funktion von Last und Drehzahl in der OBD-Elektronik als Kennfeld abgespeichert.

Eine Fehlfunktion des Katalysators liegt vor, wenn die beiden folgenden Bedingungen gleichzeitig erfüllt sind:

1. $\Delta T$ ist positiv und größer als ein für den betreffenden Motor- und Katalysatortyp festzulegender Grenzwert der Temperaturdifferenz $\Delta T_G$, das heißt die aktuelle Abgastemperatur $T_A$ liegt um mehr als diesen Grenzwert über der Anspringtemperatur für CO des frischen Katalysators $T_{CO,50\%,frisch}$:

$$T_A > T_{CO,50\%,frisch} + \Delta T_G \qquad (4)$$

2. der Umsetzungsgrad $r_{CO}$ für Kohlenmonoxid liegt unter einem für Motor- und Katalysatortyp festzulegenden Grenzumsetzungsgrad $r_{CO,G}$:

$$r_{CO} < r_{CO,G} \qquad (5)$$

Der Grenzumsetzungsgrad $r_{CO,G}$ kann beispielsweise 50% betragen.

Die Registrierung einer einzelnen Fehlfunktion reicht aber für die Feststellung einer dauerhaften Schädigung des Katalysators noch nicht aus. Da der Austausch eines Katalysators für den Halter des Fahrzeugs mit hohen Kosten verbunden ist, muss eine voreilige Einstufung des Katalysators als schwerwiegend geschädigt so weit wie möglich vermieden werden.

Der Katalysator wird daher erst dann als dauerhaft geschädigt beurteilt, wenn für mehrere Betriebspunkte des Motors eine Fehlfunktion festgestellt wird. In der Motorsteuerung sind in der Regel Kennfelder mit den Betriebsdaten des Motors für ein Raster von diskreten Betriebspunkten permanent abgespeichert. Nicht alle diese Betriebspunkte eignen sich gleich gut für die Beurteilung der Funktionsfähigkeit des Katalysators. So sind zum Beispiel Betriebspunkte mit hohen Abgastemperaturen ungeeignet, da auch ein geschädigter Katalysator bei hohen Abgastemperaturen noch gute Umsätze für Kohlenmonoxid liefern kann. Für die Beurteilung des Katalysators wird daher bevorzugt nur eine Auswahl aus den möglichen Betriebspunkten herangezogen, die besonders kritisch sind. Die Anzahl der für die Beurteilung des Katalysators ausgewählten Betriebspunkte wird im folgenden mit $n_a$ bezeichnet. Für die ausgewählten Betriebspunkte werden in der OBD-Elektronik Kennfelder mit den jeweiligen Anspringtemperaturen $T_{CO,50\%,frisch}$ für Kohlenmonoxid für den frischen Katalysator abgespeichert.

Der Katalysator gilt dann als schwerwiegend geschädigt, wenn für eine bestimmte Anzahl $n_F$ der ausgewählten Betriebspunkte eine Fehlfunktion festgestellt wird. Die Betriebspunkte, für die eine Fehlfunktion ermittelt wird und deren Anzahl können über mehrere Fahrzyklen hinweg gespeichert und aufsummiert werden. Erst wenn die Anzahl $n_F$ von Betriebspunkten mit Fehlfunktionen überschritten wird, wird ein Signal zum Auswechseln des Katalysators gesetzt.

Eine weitere Absicherung gegenüber einer voreiligen Einstufung des Katalysators als geschädigt kann gewonnen werden, wenn festgelegt wird, dass die Anzahl $n_F$ von Betriebspunkten mit Fehlfunktionen des Katalysators innerhalb eines vorzugebenden Zeitintervalls $\Delta t_F$ anfallen muss.

Die zulässige Anzahl $n_F$ von Betriebspunkten mit einer Fehlfunktion des Katalysators, die Zahl der ausgewählten Betriebspunkte $n_A$ und deren Lage, das Zeitintervall $\Delta t_F$ sowie die Größe der Parameter $\Delta T_G$ und $r_{CO,G}$ richten sich neben dem Motor- und Katalysatortyp auch nach den OBD-Gesetzgebungsregelungen. Erfindungsgemäß ist es möglich, die Parameter $\Delta T_G$ und $r_{CO,G}$ nicht als konstante Werte festzuschreiben, sondern diese als Funktion von Last und Drehzahl in der OBD-Elektronik als Kennfeld abzulegen.

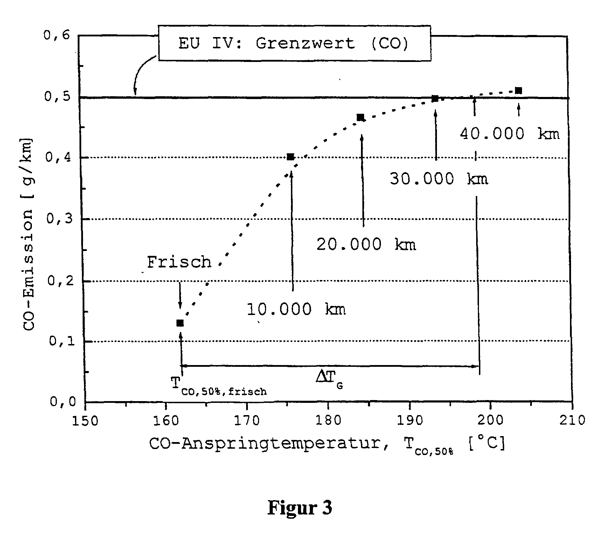

In Figur 3 sind als Beispiel die typischen, gemessenen Kohlenmonoxidemissionen eines Fahrzeuges während eines definierten Fahrzyklus (MVEG-A/2) als Funktion der gemessenen CO-Anspringtemperatur $T_{CO,50\%}$ eines Dieseloxidationskatalysators bei verschiedenen Alterungsstufen im Dauerbetrieb angegeben. In der Emissionsgesetzgebung werden maximale Emissionen innerhalb eines Fahrzyklus vorgeschrieben. In Europa beträgt die maximal zulässige Emission von CO im MVEG-A/2 Zyklus ab dem Jahr 2005 (EU IV-Standard) 0,5 g/km. Durch die Alterung des Katalysators steigt die Anspringtemperatur $T_{CO,50\%}$ des Katalysators, womit ein Anstieg der Emissionen im Fahrzyklus korreliert ist. Nach einer Fahrleistung von 40.000 km werden für das in Figur 3 gezeigte Beispiel die EU IV-Grenzwerte nicht mehr erfüllt. Der Grenzwert $\Delta T_G$ der Temperaturdifferenz $\Delta T$ kann nun so gewählt werden, dass der Katalysator nach obigen Bedingungen genau dann als schwerwiegend geschädigt gilt, wenn die gesetzlichen Emissionsgrenzwerte überschritten werden. Alternativ können statt der Emissionsgrenzwerte auch vom Gesetzgeber zu definierende OBD-Grenzwerte verwendet werden.

Die in Figur 3 als Beispiel gezeigte Kurve variiert je nach Katalysatorauslegung, Fahrverhalten, Fahrzeugtyp und Motortyp. Durch Variation des Grenzwertes $\Delta T_G$ der Temperaturdifferenz $\Delta T$ kann das hier vorgestellte OBD-Verfahren allen Fahrzeugtypen, Motortypen und Gesetzgebungsregelungen angepaßt werden.

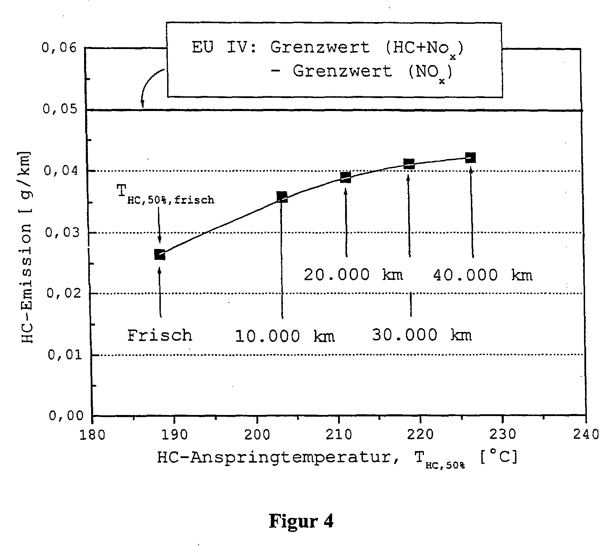

Figur 4 zeigt das zu Figur 3 entsprechende Diagramm für das am selben Fahrzeug unter identischen Meßbedingungen aufgenommene Verhalten der Kohlenwasserstoffemissionen bei gleicher Alterungsprozedur. Da in der europäischen Gesetzgebung kein fester Grenzwert für HC-Emissionen vorgegeben ist, sondern statt dessen zwei Grenzwerte jeweils für die Summe der $NO_x$- und HC-Emissionen und für die $NO_x$-Emissionen, ist in Figur 4 als Grenzlinie für die HC-Emissionen die Differenz dieser beiden Grenzwerte eingezeichnet. Figur 4 zeigt, dass die HC-Anspringtemperatur $T_{HC,50\%}$ des Katalysators bei Alterung im Dauerbetrieb nicht in dem Maße steigt wie die CO-Anspringtemperatur $T_{CO,50\%}$. Weiterhin ist der Anstieg der HC-Anspringtemperatur $T_{HC,50\%}$ nicht in dem Maße mit einem Anstieg der Emissionen verbunden wie dies bei Kohlenmonoxid der Fall ist; so wird beispielsweise selbst die Differenz der beiden Grenzwerte für HC+NOx und NOx auch nach einem Fahrzeugdauerbetrieb über 40.000 km nicht überschritten. Erfindungsgemäß wird zur Katalysatorprüfung daher CO als Indikatorschadstoff gewählt.

Sind die obigen Bedingungen 1 und 2 innerhalb des Zeitintervalls $\Delta t_F$ an den definierten Betriebspunkten erfüllt, und gilt der Katalysator somit als schwerwiegend geschädigt, kann dem Fahrer ein Signal als Fehlermeldung für den geschädigten Katalysator gegeben werden. Zusätzlich kann die Fehlerdiagnose, das heißt der Zeitpunkt des Fehlerauftretens und die zugehörigen Motorbetriebspunkte in der OBD-Elektronik gespeichert werden. Das einzelne, gleichzeitige Erfülltsein der Bedingungen 1 und 2 über ein größeres Zeitintervall als $\Delta t_F$ oder bei einer geringeren Anzahl an Betriebspunkten als $n_F$, also bei nicht vorliegender schwerwiegender Schädigung, kann für spätere Werkstattdiagnosen ebenfalls in der OBD-Elektronik abgespeichert werden, ohne dass dem Fahrer ein Fehlersignal übermittelt wird.

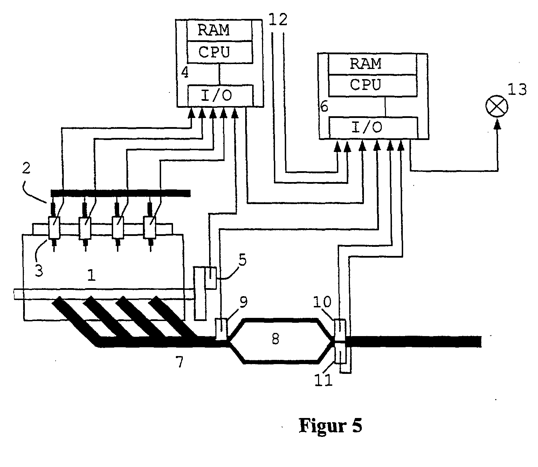

Zur weiteren Erläuterung der Erfindung dient Figur 5. Sie zeigt ein Blockschaltbild für die Durchführung des vorgeschlagenen Verfahrens. Bezugsziffer (1) bezeichnet den Dieselmotor bei dem die Kraftstoffeinleitung durch ein Injektorsystem (2) erfolgt. Die eingespritzte Kraftstoffmenge wird durch geeignete Sensoren (3) gemessen und an die Motorelektronik (4), die über einen Datenport (I/O), einen Prozessor (CPU) und einen Speicher (RAM) verfügt, übermittelt. Die Motorelektronik erhält außerdem durch ein geeignetes Sensorsystem (5) ständig Information über die aktuelle Motordrehzahl, so dass aus der Kraftstoffeinspritzmenge und der Drehzahl durch Vergleich mit einem in der Motorelektronik abgespeicherten Kennfeld die Last errechnet werden kann. Diese aus Last und Drehzahl bestehenden Betriebspunktinformationen werden an die OBD-Elektronik (6), die ebenfalls über Datenport (I/O), Prozessor (CPU) und Speicher (RAM) verfügt, weitergeleitet. Das Abgas des Motors wird über die Abgasleitung (7) zum Abgasreinigungskonverter (8), in dem ein geeigneter Katalysator angeordnet ist, geleitet. Die Bezugsziffern (9) und (10) bezeichnen die Sensoren für Kohlenmonoxid, dessen Konzentration vor und hinter dem Katalysator zur Ermittlung des Umsetzungsgrades gemessen wird, wobei der Sensor (9) abhängig von der Ausführungsform des Verfahrens optional ist. (11) bezeichnet einen Temperaturfühler der in unmittelbarer räumlicher Nähe zum Sensor (10) im Abgasstrang angeordnet ist. Die Signale der CO-Sensoren (9) und (10) und die des Temperaturfühlers (11) werden an die OBD-Elektronik (6) weitergeleitet. Die OBD-Elektronik erhält über weitere Sensoren und Signalleitungen (12) Informationen über alle anderen abgasrelevanten Bauteile des Motors, des Kraftstoffsystems und des Abgassystems. Anhand der Meßwerte und der zuvor beschriebenen Kriterien entscheidet die OBD-Elektronik ob der Katalysator noch eine ausreichende katalytische Aktivität aufweist oder schwerwiegend geschädigt ist und ausgewechselt werden muß. Fehlerdiagnosen werden im Speicher der OBD-Elektronik abgelegt und eine schwerwiegende Katalysatorschädigung durch eine Warnlampe (13) signalisiert.

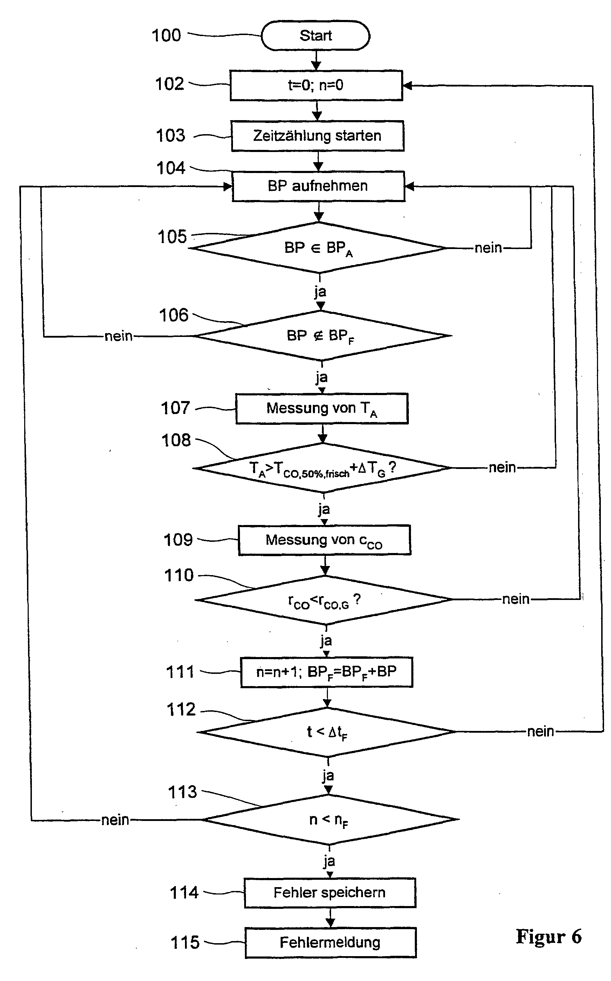

Figur 6 erläutert beispielhaft an Hand eines Flussdiagrammes, wie eine schwerwiegende Schädigung des Katalysators gemäß dem erfindungsgemäßen Verfahren festgestellt werden kann. Im Rahmen der Patentansprüche sind weitere Varianten dieser Vorgehensweise möglich.

Bezugsziffer (100) bezeichnet den Start des Verfahrens, welches von einem in der OBD-Elektronik gespeicherten Ablaufprogramm überwacht und gesteuert wird. In Schritt (102) werden zunächst die Zeitmessung t und die Anzahl n der abgespeicherten, Betriebspunkte mit einer Fehlfunktion des Katalysators auf Null gesetzt. In Schritt (103) wird die Zeitmessung gestartet, worauf in Schritt (104) der aktuelle Motorbetriebspunkt (BP) aus Last und Drehzahl aufgenommen wird. Es wird in Schritt (105) geprüft, ob der aktuelle Betriebspunkt ein Element aus der Menge $BP_A$ ($BP \in BP_A$ ?) der für die Beurteilung des Katalysators ausgewählten und in der OBD-Elektronik gespeicherten Betriebspunkte ist. Ist dies nicht der Fall, wird mit der Aufnahme eines neuen Betriebspunktes fortgefahren (104). Anderenfalls wird in Schritt (106) geprüft, ob der aktuelle Betriebspunkt BP schon der Menge der bisher abgespeicherten Betriebspunkte BPF, für die eine Fehlfunktion des Katalysators festgestellt wurde, angehört oder sich davon unterscheidet. Wurde für diesen Betriebspunkt schon einmal eine Fehlfunktion festgestellt, so wird mit Schritt (104) fortgefahren. Ansonsten wird in Schritt (107) die Messung der aktuellen Abgastemperatur $T_A$ hinter dem katalytischen Konverter vorgenommen. In Schritt (108) wird dann geprüft, ob die aktuelle Abgastemperatur $T_A$ größer als die Summe aus der CO-Anspringtemperatur $T_{CO,50\%,frisch}$ des frischen Katalysators und dem Grenzwert der Temperaturdifferenz $\Delta T_G$ ist. Ist dies nicht der Fall, wird mit der Aufnahme eines neuen Betriebspunktes in Schritt (104) fortgefahren. Ansonsten wird in Schritt (109) die Messung der Kohlenmonoxidkonzentration vorgenommen. In Schritt (110) wird der Umsetzungsgrad $r_{CO}$ für CO bestimmt und geprüft, ob dieser unter dem Grenzumsetzungsgrad $r_{CO,G}$ liegt. Ist dies nicht der Fall, wird ebenfalls mit der Aufnahme eines neuen Betriebspunktes in Schritt (104) fortgefahren. Andernfalls wird der aktuelle Betriebspunkt BP in Schritt (111) in der OBD-Elektronik gespeichert, das heißt er wird der Menge der Betriebspunkte $BP_F$ hinzugefügt ($BP_F=BP_F+BP$), für die schon vorher eine Fehlfunktion des Katalysators festgestellt wurde. Außerdem wird die Anzahl n der abgespeicherten Betriebspunkte mit Fehlfunktion um eins erhöht. In Schritt (112) wird geprüft, ob die seit Schritt (103) verstrichene Zeit kleiner als das Zeitintervall $\Delta t_F$ ist. Ist das Zeitintervall überschritten, wird mit Schritt (102) fortgefahren, das heißt die Zeitzählung und die abgespeicherten Betriebspunkte mit Fehlfunktion werden zurückgesetzt. Ist dagegen das Zeitintervall noch nicht überschritten, wird in Schritt (113) geprüft, ob die zulässige Anzahl $n_F$ von Betriebspunkten mit Fehlfunktion bereits erreicht ist. Wenn dies noch nicht der Fall ist, wird mit der Aufnahme weiterer Betriebspunkte in Schritt (104) fortgefahren. Ist die zulässige Anzahl an Betriebspunkten überschritten, so wird dies in Schritt (114) in der OBD-Elektronik als schwerwiegende Schädigung des Katalysators gespeichert und in Schritt (115) ein Fehlersignal ausgegeben.

## Patentansprüche

1. Verfahren zur Überprüfung der Funktionstüchtigkeit eines Katalysators für die Reinigung der Abgase eines Verbrennungsmotors während des Betriebs des Motors, wobei der Katalysator eine Anspringtemperatur und einen Umsetzungsgrad $r_{CO}$ für Kohlenmonoxid (CO) aufweist, **dadurch gekennzeichnet,** **dass** der Verbrennungsmotor mit einer elektronischen Steuerung aus Motorelektronik und OBD-Elektronik ausgerüstet ist und zur Beurteilung der verbliebenen katalytischen Aktivität des Katalysators die Differenz $\Delta T$ der aktuellen Katalysatoraustrittstemperatur des Abgases $T_A$ zur Anspringtemperatur für Kohlenmonoxid $T_{CO,50\%,frisch}$ des frischen Katalysators

$$\Delta T = T_A - T_{CO,\,50\%,frisch}$$

im aktuellen Motorbetriebspunkt bestimmt und der Umsetzungsgrad $r_{CO}$ für Kohlenmonoxid ermittelt werden und dass ein Überschreiten der Temperaturdifferenz $\Delta T$ über einen Grenzwert $\Delta T_G$ an einem Motorbetriebspunkt bei gleichzeitigem Vorliegen eines Umsetzungsgrades $r_{CO}$ für Kohlenmonoxid unter einem Grenzwert $r_{CO,G}$ des Umsetzungsgrades für Kohlenmonoxid in der OBD-Elektronik als Fehlfunktion des Katalysators aufgezeichnet wird.

2. Verfahren nach Anspruch 1, **dadurch gekennzeichnet,** **dass** der Umsatzgrad $r_{CO}$ für Kohlenmonoxid ermittelt wird als

$$r_{CO} = 1 - \frac{c_{CO,2}}{c_{CO,1}},$$

wobei $c_{CO,2}$ die gemessene Konzentration von Kohlenmonoxid im Abgas hinter dem Katalysator und $c_{CO,1}$ die gemessene Konzentration von Kohlenmonoxid im Abgas vor dem Katalysator ist.

3. Verfahren nach Anspruch 1, **dadurch gekennzeichnet,** **dass** der Umsatzgrad $r_{CO}$ für Kohlenmonoxid ermittelt wird als

$$r_{CO} = 1 - \frac{c_{CO,2}}{c_{CO,Motor}},$$

wobei $c_{CO,2}$ die gemessene Konzentration von Kohlenmonoxid im Abgas hinter dem Katalysator und $c_{CO,Motor}$ die in der OBD-Elektronik als Kennfeld abgespeicherte Kohlenmonoxidkonzentration für den aktuellen Motorbetriebspunkt ist.

**4.** Verfahren nach einem der Ansprüche 2 oder 3, **dadurch gekennzeichnet,** **dass** der Katalysator als schwerwiegend geschädigt eingestuft wird, wenn die Anzahl von Betriebspunkten, für die eine Fehlfunktion festgestellt wurde, eine vorgegebene, zulässige Anzahl $n_F$ von Betriebspunkten mit einer Fehlfunktion des Katalysators überschreitet.

**5.** Verfahren nach einem der Ansprüche 2 oder 3, **dadurch gekennzeichnet,** **dass** der Katalysator als schwerwiegend geschädigt eingestuft wird, wenn die Anzahl von Betriebspunkten, für die eine Fehlfunktion festgestellt wurde, eine vorgegebene, zulässige Anzahl $n_F$ von Betriebspunkten mit einer Fehlfunktion des Katalysators in einem ebenfalls vorgegebenen Zeitintervall $\Delta t_F$ überschreitet.

**6.** Verfahren nach Anspruch 4 oder 5, **dadurch gekennzeichnet,** **dass** bei Einstufung des Katalysators als schwerwiegend geschädigt ein Signal zum Auswechseln des Katalysators gesetzt wird.

**Claims**

**1.** Method for examining the performance of a catalyst for the purification of the exhaust gases of a combustion engine during operation of the engine, wherein the catalyst comprises a light-off temperature and a conversion ratio $r_{CO}$ for carbon monoxide (CO) **characterized in that** the combustion engine is equipped with an electronic control comprising an electronic engine control and an electronic OBD system and that for the evaluation of the remaining catalytic activity of the catalyst the difference $\Delta T$ between the current exhaust gas temperature when leaving the catalyst $T_A$ and the light-off temperature for carbon monoxide $T_{CO, 50\%, fresh}$ of the fresh catalyst

$$\Delta T = T_A - T_{CO, 50\%, fresh}$$

is determined at the current engine operation point and the conversion ratio $r_{CO}$ for carbon monoxide is determined and that the excess of the temperature difference $\Delta T$ over a limit $\Delta T_G$ at a certain engine operation point with a simultaneous conversion ratio $r_{CO}$ for carbon monoxide below a limit $r_{CO,G}$ of the conversion ratio for carbon monoxide in the electronic OBD system is registered as a malfunction of the catalyst.

**2.** Method according to claim 1, **characterized in that** the conversion ratio $r_{CO}$ for carbon monoxide is determined as

$$r_{CO} = 1 - \frac{c_{CO,2}}{c_{CO,1}},$$

wherein $c_{CO,2}$ is the measured concentration of carbon monoxide in the exhaust gas after the catalyst and $c_{CO,1}$ is the measured concentration of carbon monoxide in the exhaust gas before the catalyst.

**3.** Method according to claim 1, **characterized in that** the conversion ratio $r_{CO}$ for carbon monoxide is determined as

$$r_{CO} = 1 - \frac{c_{CO,2}}{c_{CO,engine}},$$

wherein $c_{CO,2}$ is the concentration of carbon monoxide in the exhaust gas after the catalyst and $c_{CO,engine}$ is the concentration of carbon monoxide stored as performance characteristic of the current engine operation point in the electronic OBD system.

**4.** Method according to any of claims 2 or 3, **characterized in that** the catalyst is rated severely damaged if the number of operation points for which a malfunction was found exceeds a preset permissible number $n_F$ of operation points with a catalyst malfunction.

**5.** Method according to any of claims 2 or 3, **characterized in that** the catalyst is rated severely damaged if the number of operation points for which a malfunction was found exceeds a preset permissible number $n_F$ of operation points with a catalyst malfunction during a preset time interval $\Delta t_F$.

**6.** Method according to any of claims 4 or 5, **characterized in that** when the catalyst is rated severely damaged, a signal for replacing the catalyst is given.

## Revendications

1. Procédé pour tester le bon fonctionnement d'un catalyseur pour la purification des effluents gazeux d'un moteur à combustion au cours du fonctionnement du moteur, dans lequel le catalyseur présente une température de démarrage et un degré de conversion $r_{CO}$ pour le monoxyde de carbone (CO), **caractérisé en ce que** le moteur de combustion est équipé d'une commande électronique formée d'une électronique de moteur et d'une électronique OBD (système de diagnostic à bord) et, pour évaluer l'activité catalytique restante du catalyseur, on détermine la différence $\Delta T$ entre la température courante des effluents gazeux $T_A$ à la sortie du catalyseur et la température de démarrage pour le monoxyde de carbone $T_{CO,50\%,frais}$ du catalyseur frais :

$$\Delta T = T_A - T_{CO,50\%,frais}$$

au point de fonctionnement respectif du moteur et on établit le degré de conversion $r_{C0}$ pour le monoxyde de carbone et **en ce qu'**un dépassement de la différence de température $\Delta T$ au-dessus d'une valeur limite $\Delta T_G$ en un point de fonctionnement du moteur en présence simultanée d'un degré de conversion $r_{CO}$ pour le monoxyde de carbone qui se situe en dessous d'une valeur limite $r_{CO,G}$ du degré de conversion pour le monoxyde de carbone est enregistré dans l'électronique OBD comme fonction d'erreur du catalyseur.

2. Procédé selon la revendication 1, **caractérisé en ce que** le degré de conversion $r_{CO}$ pour le monoxyde de carbone est établi par l'équation :

$$r_{CO} = 1 - \frac{c_{CO,2}}{c_{CO,1}}$$

dans laquelle $c_{CO,2}$ est la concentration mesurée de monoxyde de carbone dans les effluents gazeux en aval du catalyseur et $c_{CO,1}$ est la concentration mesurée de monoxyde de carbone dans les effluents gazeux en amont du catalyseur.

3. Procédé selon la revendication 1, **caractérisé en ce que** le degré de conversion $r_{CO}$ pour le monoxyde de carbone est établi par l'équation :

$$r_{CO} = 1 - \frac{c_{CO,2}}{c_{CO,moteur}}$$

dans laquelle $c_{CO,2}$ est la concentration mesurée de monoxyde de carbone dans les effluents gazeux en aval du catalyseur et $c_{CO,moteur}$ est la concentration de monoxyde de carbone mémorisée comme champ de caractéristiques dans l'électronique OBD pour le point de fonctionnement courant du moteur.

4. Procédé selon l'une quelconque des revendications 2 ou 3, **caractérisé en ce que** le catalyseur est classé comme gravement dégradé si le nombre de points de fonctionnement, pour lequel une fonction d'erreur a été établie, dépasse un nombre prédéterminé admis $n_F$ de points de fonctionnement ayant une fonction d'erreur du catalyseur.

5. Procédé selon l'une quelconque des revendications 2 ou 3, **caractérisé en ce que** le catalyseur est classé comme gravement dégradé si le nombre de points de fonctionnement, pour lesquels une fonction d'erreur a été établie, dépasse un nombre prédéterminé admis $n_F$ de points de fonctionnement ayant une fonction d'erreur du catalyseur dans un intervalle de temps également prédéterminé $\Delta t_F$.

6. Procédé selon la revendication 4 ou 5, **caractérisé en ce que**, lorsque le catalyseur est classé comme gravement dégradé, un signal de remplacement du catalyseur est activé.

**Figur 1**

**Figur 2**

**Figur 3**

Figur 4

**Figur 5**

100 — Start

102 — $t=0; n=0$

103 — Zeitzählung starten

104 — BP aufnehmen

105 — BP $\in$ BP$_A$ — nein

ja

106 — BP $\notin$ BP$_F$ — nein

ja

107 — Messung von T$_A$

108 — $T_A > T_{CO,50\%,frisch} + \Delta T_G$ ? — nein

ja

109 — Messung von c$_{CO}$

110 — $r_{CO} < r_{CO,G}$ ? — nein

ja

111 — $n=n+1; BP_F=BP_F+BP$

112 — $t < \Delta t_F$ — nein

ja

113 — nein — $n < n_F$

ja

114 — Fehler speichern

115 — Fehlermeldung

**Figur 6**